# EUROPÄISCHE PATENTSCHRIFT

(11) **EP 0 430 061 B1**
(45) Veröffentlichungstag und Bekanntmachung des Hinweises auf die Patenterteilung: **10.02.1993**
(21) Anmeldenummer: 90122283.6
(22) Anmeldetag: 22.11.1990
(51) Int. Cl.: F24H 1/28, F24H 8/00

(54) **Heizkessel**
Boiler
Chaudière de chauffage

(30) Priorität: 27.11.1989 DE 3939133
(43) Veröffentlichungstag der Anmeldung: 05.06.1991
(73) Patentinhaber: Viessmann, Hans, Dr., 95030 Hof/Saale (DE)
(72) Erfinder: Viessmann, Hans, Dr., 95030 Hof/Saale (DE)
(74) Vertreter: Wolf, Günter, Dipl.-Ing.

(56) Entgegenhaltungen:
- DE-A- 3 238 603
- DE-U- 1 696 521
- DE-U- 8 617 230

## Beschreibung

Die Erfindung betrifft einen Heizkessel zum Verbrennen flüssiger oder gasförmiger Brennstoffe gemäß Oberbegriff des Hauptanspruches.

Derartige Heizkessel, die insbesondere als sogenannte Brennwert-bzw. Kondensatheizkessel betrieben werden, sind bspw. nach dem DE-U-86 17 230 bekannt. die im brennerfernen Bereich bzw. am hinteren Ende seitlich von dem Brenner abgehenden Heizgaszüge sind dabei als Rohr- oder Taschenpaket ausgebildet, an dessen unterem Ende eine Abgas- und Kondensatsammelkammer angeordnet ist. Das die Brennkammer und die Heizgaszüge umgebende, wasserführende Gehäuse ist entsprechend angepaßt, d.h., es handelt sich dabei um zwei entsprechend durchmessergroße Rohre, die im Ansatzbereich der Heizgaszüge an die Brennkammer mehr oder weniger rechtwinklig aneinandergestoßen und miteinander längs einer entsprechenden Durchdringungskurve flüsigkeitsdicht verbunden sind. Die Anschlußenden der Heizgasgzüge, soweit es sich dabei um Taschen handelt, müssen dabei an die zylindrische Form der Brennkammer angepaßt sein und, soweit es sich um Einzelrohre handelt, ergeben sich unterschiedliche Rohrlängen, wobei die Enden der Rohre ebenfalls an die zylindrische Form der Brennkammer angepaßt sein müssen. Abgesehen vom baulichen Aufwand, der sich daraus ergibt, liegen dabei keine idealen Strömungsverhältnisse vor, und zwar was die feuerungsseitigen Einströmverhältnisse der Heizgase in die Heizgaszüge betrifft als auch die Abströmverhältnisse auf der Wasserseite im Anschlußbereich der Heizgaszüge an die Brennkammer.

Nach der DE-A-32 38 603 ist ebenfalls eine Kondensatheizkesselkonstruktion bekannt, bei der die Brennkammer in einem oberen, horizontal und die Heizgaszüge mit ihrem unteren Teil in einem unteren, vertikal orientierten Gehäuseteil angeordnet sind, welche Gehäuseteile durch eine horizontal eingesetzte Trennwand nur in einen oberen und unteren Innenraum gegliedert werden. Um die Heizgaszüge vom vertikalen Brennkammerboden aus in das untere Gehäuseteil einzuführen und dort an den darunter befindlichen Abgas- und Kondensatsammelraum anschließen zu können, sind diese rohrförmigen Heizgaszüge mit unerschiedlichen Längen bogenförmig an die winklige Zuordnung der beiden Gehäuseteile angepaßt.

Der Erfindung liegt demgemäß die Aufgabe zugrunde, einen Heizkessel der eingangs genannten Art dahingehend zu verbessern, daß sich einfache Zuschnittsverhältnisse für sämtliche beteiligten Bleche bzw. Rohre ergeben, verbunden mit der Maßgabe, die Strömungsverhältnisse sowohl feuerungs- als auch wasserseitig zu verbessern.

Diese Aufgabe ist mit einem Heizungskessel der eingangs genannten Art nach der Erfindung durch die im Kennzeichen des Hauptanspruches angeführten Merkmale gelöst. Vorteilhafte Weiterbildungen und praktische Ausführungsformen ergeben sich nach den Unteransprüchen.

Entscheidend für die Lösung der gestellten Aufgabe ist dabei, daß das die Brennkammer enthaltende Oberteil und das die Heizgaszüge enthaltende Unterteil des Kessels längs einer etwa unter 45° verlaufenden Gehrungsschnittebene aneinandergefügt sind, was nicht nur bezüglich der rohrförmig gebogenen Mantelbleche für das wasserführende Gehäuse gilt, sondern auch konsequent für den Anschluß der Heizgaszüge an die Brennkammer. Der dem Brenner gegenüberstehende Boden der Brennkammer wird also durch eine gewissermaßen pultartig dem Brenner gegenüberstehende, ebenflächige Platte gebildet, die sich in der Gehrungsschnittebene erstreckt. Soweit also dabei die Heizgaszüge als Rohre ausgebildet sind, bedürfen diese lediglich eines entsprechenden Schrägabschnittes, wobei sich für die einzelnen Rohre, sofern nicht noch andere diesbezüglich erleichternde Maßnahmen getroffen werden, unterschiedlicher Zuschnittslängen ergeben. Bei der Anordnung von Taschen ergeben sich dabei vorteilhaft einfache geradlinige Abschnittslinien, die das Einschweißen bzw. Anschweißen der Taschen an die Platte wesentlich vereinfachen. Bevorzugt werden also im vorliegenden Zusammenhang die Heizgaszüge in an sich bekannter Weise als Taschen ausgebildet.

Mit der erfindungsgemäßen Ausbildung ergeben sich jedoch nicht nur konstruktive und fertigungstechnische Vereinfachungen, sondern die Strömungsverhältnisse sowohl feuerungs- als auch wasserseitig sind damit wesentlich verbessert. Da die Einmündungen der Heizgaszüge dem Brenner direkt vis-à-vis stehen, können die Heizgase direkt in die sich ebenfalls in Schrägstellung befindlichen Öffnungen der Heizgaszüge einströmen, womit auch ein gleichmäßigerer Füllungsgrad der Heizgaszüge erreicht werden kann. Wasserseitig ist die Abführung der übertragenen Wärme bzw. des Wassers noch wesentlich günstiger, da das erwärmte Wasser unbehindert an der schrägstehenden Platte nach oben abströmen kann. In Rücksicht darauf werden die bevorzugt als Taschen ausgebildeten Heizgaszüge mit ihrer Querschnittslängsachse in Anströmrichtung orientiert angeordnet.

Die Einbindung der Platte in das Kesselgehäuse kann dabei auf unterschiedliche Weise erfolgen. Eine diesbezügliche Ausführungsform besteht darin, daß die Platte als mit beiden Gehäuseteilen verschweißte Trennfläche ausgebildet und im Bereich der wasserführenden Innenräume mit Überströmöffnungen versehen ist, welche Überströmöffnungen die Verbindung zwischen den beiden Innenräumen der wasserführenden Gehäuseteile herstellen. Die zweite diesbezügliche Ausführungsform besteht darin, daß die Paltte mit dem unteren Gehäuseteil verbunden, der wasserführende Innenraum des oberen Gehäuseteiles mit einer Ringfläche verschlossen ist, und beide Gehäuseteile in der Gehrungsschnittebene miteinander verbunden sind, wobei der Innenraum des unteren Gehäuseteiles mit mindestens einer an der höchsten Stelle des Innenraumes angesetzten, zum Kesselvorlauf führenden Überströmleitung versehen ist. Unter Verbindung der beiden Gehäuseteile ist dabei in diesem Falle keine Schweißverbindung zu verstehen, sondern lediglich ein gasdichter Anschluß der beiden Gehäuseteile zueinander, was möglich ist, da ja jedes Gehäuseteil bezüglich der Wasserführung ein in sich geschlossenes Gebilde darstellt, was noch näher erläutert wird.

Sofern ein derartiger Heizkessel als Kondensatheizkessel betrieben werden soll, was bevorzugt vorgesehen ist, ist an der Platte im Bereich der tiefstliegenden Brennkammermantellinie eine das untere Gehäuseteil durchgreifende, im Kondensatsammelraum ausmündende Kondensatabflußleitung angeschlossen.

Was die oben bereits angesprochene unterschiedliche Längenbemessung der Heizgaszüge betrifft, so besteht eine vorteilhafte Weiterbildung darin, daß das untere Gehäuseteile mit einer sich zur den Boden der Brennkammer bildenden Platte parallel erstreckenden Heizgaszuganschlußplatte abgeschlossen ist, die zusammen mit einem kondensatfesten Bodenblech und einer den Abgasanschlußstutzen aufweisenden Seitenwand den mit Kondensatabfluß versehenen Abgas- und Kondensatsammelraum begrenzt. Diese Heizgaszuganschlußplatte erstreckt sich also im unteren Kesselgehäuse parallel zur Gehrungsschnittebene, was aber bedeutet, daß die Heizgaszüge, egal ob es sich um Taschen oder Rohre handelt, alle mit der gleichen Länge zugeschnitten werden können.

Bezüglich der Zuordnung der beiden Gehäuseteile ist vorgesehen, daß die Längsachse des oberen Gehäuseteiles - und damit die der Brennkammer - senkrecht zur Längsachse des unteren Gehäuseteiles angeordnet ist, wobei die Gehrungsschnittebene den Winkel der beiden Längsachsen halbiert bzw. angenähert halbiert. Um günstige Abflußverhältnisse für sich etwa niederschlagendes Kondensat zu schaffen, ist dabei die Längsachse des unteren Gehäuseteiles in bezug auf die Vertikale zur brennerfernen Seite hin um einen Winkel von 1 bis 10°, vorzugsweise um 5° geneigt angeordnet.

Bei der Ausführungsform, bei der die beiden Gehäuseteile nicht miteinander verschweißt sind, ist die sich in der Gehrungsschnittebene erstreckende Platte mit einer Eintiefung und die zum oberen Gehäuseteil gehörende Ringfläche mit einem Ringkragen versehen, der sich unter Einfügung einer geeigneten Ringdichtung in die Eintiefung einsetzt. Abgesehen davon, daß man in diesem Falle die beiden Kesselteile im Bereich der Gehrungsschnittebene ohne weiteres per Schraubverbindung verflanschen könnte, kann aber der Zusammenhalt der beiden Gehäuseteile auch ohne weiteres durch die dann notwendigen Vorlaufleitungsverbindungen vom Unterteil zum Oberteil erzielt werden.

Der erfindungsgemäße Heizkessel wird nachfolgend anhand der zeichnerischen Darstellung von Ausführungsbeispielen näher erläutert.

Es zeigt schematisch
Fig. 1 einen Längsschnitt durch den Heizkessel;
Fig. 2 einen Schnitt durch das untere Gehäuseteil längs Linie II-II in Fig. 1;
Fig. 3 vergrößert und im Teilschnitt die Schweißverbindung der beiden Gehäuseteile in der Gehrungsschnittebene und
Fig. 4 ebenfalls vergrößert, die schweißverbindungsfreie Verbindung der beiden Gehäuseteile.

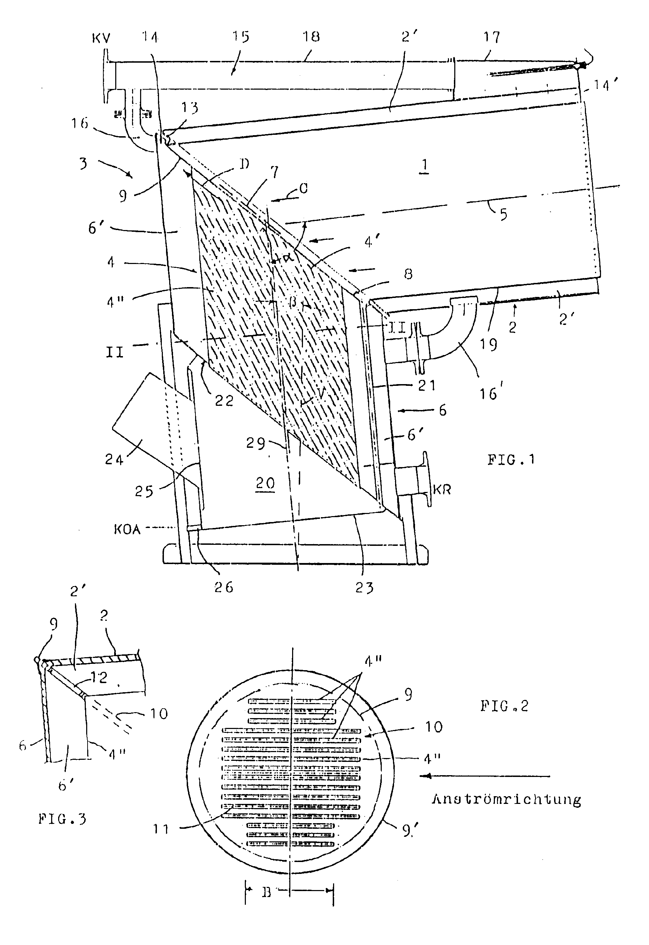

Der Heizkessel besteht aus einem wasserführenden Gehäuse 3 mit im Oberteil angeordneter, im wesentlichen horizontal orientierter Brennkammer 1, von der aus Heizgaszüge 4 zu einer unten am Gehäuse angeordneten Abgas- und Kondensatsammelkammer 20 mit Abgasanschlußstutzen 24 geführt sind, wobei die Heizgaszüge 4 und deren Einmündungen an die Brennkammer 1 im brennerfernen Bereich angeschlossen sind. Wesentlich für diesen Heizkessel ist nun, wie insbesondere aus Fig. 1 ersichtlich, daß der die Brennkammer 1 enthaltende Gehäuseteil 2 und damit die Brennkammer 1 selbst und der die Heizgaszüge 4 enthaltende Gehäuseteil 6 des wasserführenden Gehäuses 3 in einer gemeinsamen Gehrungsschnittebene 7 zusammengefügt sind, in der eine entsprechend geneigte, den brennerfernen Boden 8 der Brennkammer 1 bildende Platte 9 mit Heizgaszugöffnungen 10 angeordnet ist, an die die Heizgaszugenden 4′ flüssigkeitsdicht angeschlossen sind, und daß die wasserführenden Innenräume 2′, 6′ der beiden Gehäuseteile 2, 6 miteinander verbunden sind. Beim dargestellten Ausführungsbeispiel in Fig. 1 sind dabei die Heizgaszüge 4 in Form von Taschen 4˝ ausgebildet, wobei die Taschen 4˝ mit ihren Querschnittslängsachsen 11 (s. Fig. 2) in Anströmrichtung orientiert angeordnet sind. Die Platte 9 mit den Heizgaszugöffnungen 10 stellt sich bei einem Blick in die Brennkammer 1 vom Brenner her gesehen ebenfalls im Sinne der Fig. 2 dar und zwar lediglich mit dem Unterschied, daß der sichtbare Rand 9′ der Platte 9 eine Ellipse bildet. Um den verfügbaren Plattenquerschnitt möglichst voll mit Heizgaszugöffnungen 10 besetzen zu können, werden, wie aus Fig. 2 ersichtlich, die äußeren Taschen in der Breite B entsprechend kürzer als die im inneren Bereich angeordneten Taschen bemessen. Ungeachtet dieser unterschiedlichen Breitenbemessung sind dabei aber die Abschnittsgeraden der Taschen geradlinig verlaufend ausgebildet, was die Anschlußeinschweißung der Taschen an die Platte 9 bzw. an die in dieser entsprechend ausgestanzten Heizgaszugöffnungen 10 ganz wesentlich vereinfacht. Die Heizgaszugöffnungen 10 werden dabei, wie mit Pfeilen C angedeutet, direkt und ohne vorherige Umlenkung in der Brennkammer 1 angeströmt, während wasserseitig in diesem Bereich das erwärmte Wasser unbehindert in Pfeilrichtung D nach oben abströmen kann.

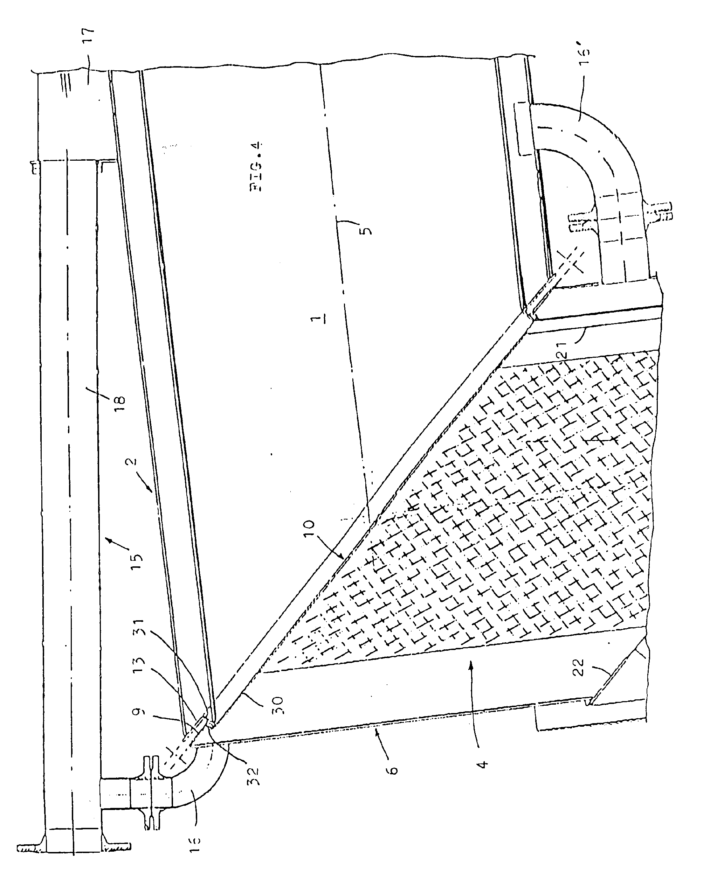

Wie vorerwähnt, können die beiden Gehäuseteile 2, 6 schweißverbunden werden, wie dies in Fig. 3 verdeutlicht ist. Hierbei ist die Platte 9 als mit beiden Gehäuseteilen 2, 6 verschweißte Trennfläche ausgebildet und im Bereich der wasserführenden Innenräume 2′, 6′ mit Überströmöffnungen 12 versehen. Bevorzugt wird in diesem Zusammenhang jedoch die Ausführungsform, wie in Fig. 1 und 4 verdeutlicht. Hierbei ist die Platte 9 mit dem unteren Gehäuseteil 6 verbunden, der wasserführende Innenraum 2′ des oberen Gehäuseteiles 2 mit einer Ringfläche 13 verschlossen, und beide Gehäuseteile 2, 6 sind in der Gehrungsschnittebene 7 miteinander verbunden, wobei der Innenraum 6′ des unteren Gehäuseteiles mit mindestens einer, an der höchsten Stelle 14 des Innenraumes 6′ angesetzten Überströmleitung 16 versehen ist. Bei dieser Verbindung liegt also keine Schweißverbindung vor, sondern die beiden Gehäuseteile sind in der Gehrungsschnittebene 7, gasdicht mit einer geeigneten Ringdichtung 32 abgedichtet aneinandergefügt. Zweckmäßig ist dabei die Platte 9 (s. vergrößert in Fig. 4) mit einer Eintiefung 30 und die Ringfläche 13 mit einem Ringkragen 31 versehen, der sich, wie dargestellt, in die Eintiefung 30 einsetzt. Wie gestrichelt in Fig. 4 angedeutet, können dabei die beiden Gehäuseteile 2, 6 sicherheitshalber mit wenigen Schrauben gewissermaßen verflanscht werden. Abgesehen davon bedarf es aber einer solchen Schraubverbindung nicht zwingend, da das untere Gehäuseteil 6 sowieso mit entsprechenden Verbindungs- bzw. Vorlaufleitungen bzgl. der wasserführenden Innenräume 2′, 6′ mit dem Gehäuseoberteil 2 verbunden werden muß, die dann den Zusammenhalt der beiden Gehäuseteile 2, 6 gewährleisten.

In Rücksicht auf einen möglichst gleichen Längenzuschnitt der Heizgaszüge 4, egal ob es sich dabei um Heizgaszugtaschen 4˝ oder (nicht dargestellt) um Heizgaszugrohre handelt, ist das untere Gehäuseteil 6 mit einer sich zur Platte 9 in entsprechendem Abstand parallel erstreckenden Heizgaszuganschlußplatte 22 abgeschlossen, die zusammen mit einem kondensatfesten Bodenblech 23 und einer den Abgasanschlußstutzen 24 aufweisenden Seitenwand 25 den mit Kondensatabfluß 26 versehenen Abgas- und Kondensatsammelraum 20 begrenzt.

Die Längsachse 5 des oberen Gehäuseteiles 2 - und damit auch die der Brennkammer 1 - ist senkrecht zur Längsachse 29 des unteren Gehäuseteiles 6 angeordnet, wobei die Gehrungsschnittebene 7 den Winkel α der beiden Längsachsen 5, 29 halbiert bzw. angenähert halbiert. In Rücksicht auf einen begünstigten Kondensatabfluß in allen Bereichen ist die Längsachse 29 des unteren Gehäuseteiles 6 in bezug auf die Vertikale V zur brennerfernen Seite hin um einen Winkel ß von 1 bis 10°, vorzusweise um 5°, wie dargestellt, geneigt angeordnet.

Bezüglich der Gestaltung des Kesselvorlaufes 15 und zwar insbesondere in Rücksicht auf dessen schwach geneigte Anordnung des Kessels, wie in Fig. 1 dargestellt, ist an der höchsten Stelle 14′ des Innenraumes 2′ des oberen Gehäuseteiles 2 ein Kesselvorlaufanschlußkasten 17 mit Vorlaufleitung 18 angeordnet, an die die Überströmleitung 16 des unteren Gehäuseteiles 6 angeschlossen ist. Beim Ausführungsbeispiel nach Fig. 3 ist eine solche Überströmleitung 16 nicht zwingend erforderlich, aber auch möglich, da hierbei das längs der Platte 9 aufströmende Wärmeträgermedium durch die Überströmöffnungen 12 in den wasserführenden Innenraum 2′ des Oberteiles 2 gelangen können. Solche Öffnungen sind beim Ausführungsbeispiel gemäß Fig. 3 natürlich gleichmäßig auf den ganzen Umfang der Platte 9 verteilt angeordnet. An der Platte 9 ist im Bereich der tiefstliegenden Brennkammermantellinie 19 eine das untere Gehäuseteil 6 durchgreifende, im Abgas und Kondensatsammelraum 20 ausmündende Kondensatabflußleitung 21 angeschlossen. In diesem Bereich sind auch das untere und obere Gehäuseteil 6, 2 mit einer Überströmleitung 16′, wie dargestellt verbunden.

## Patentansprüche

1. Heizkessel, bestehend aus einem wasserführenden Gehäuse (3) mit im Oberteil angeordneter, im wesentlichen horizontal orientierter Brennkammer (1), von der aus Heizgaszüge (4) zu einer unten am Gehäuse angeordneten Abgas- und Kondensatsammelkammer (20) mit Gasabzug geführt sind, wobei die Heizgaszüge (4) und deren Einmündungen an die Brennkammer (1) im brennerfernen Bereich angeschlossen sind,
**dadurch gekennzeichnet,**
daß der die Brennkammer (1) enthaltende Gehäuseteil (2) des Gehäuses (3) und die Brennkammer (1) selbst und der die Heizgaszüge (4) enthaltende Gehäuseteil (6) des wasserführenden Gehäuses (3) in einer gemeinsamen Gehrungsschnittebene (7) zusammengefügt sind, in der eine entsprechend geneigte, den brennerfernen Boden (8) der Brennkammer (1) bildende Platte (9) mit Heizgaszugöffnungen (10) angeordnet ist, an die die Heizgaszugenden (4′) flüssigkeitsdicht angeschlossen sind, und daß die wasserführenden Innenräume (2′, 6′) der beiden Gehäuseteile (2, 6) miteinander verbunden sind.

2. Heizkessel nach Anspruch 1,
**dadurch gekennzeichnet**,
daß die Heizgaszüge (4) in Form von Taschen (4˝) ausgebildet sind.

3. Heizkessel nach Anspruch 2,
**dadurch gekennzeichnet**,
daß die Taschen (4˝) mit ihren Querschnitts-Längsachsen (11) in Anströmrichtung orientiert angeordnet sind.

4. Heizkessel nach einem der Ansprüche 1 bis 3,
**dadurch gekennzeichnet**,
daß die Platte (9) als mit beiden Gehäuseteilen (2, 6) verschweißte Trennfläche ausgebildet und im Bereich der wasser-führenden Innenräume (2′, 6′) mit Überströmöffnungen (12) versehen ist.

5. Heizkessel nach einem der Ansprüche 1 bis 3,
**dadurch gekennzeichnet**, ,
daß die Platte (9) mit dem unteren Gehäuseteil (6) verbunden, der wasserführende Innenraum (2′) des oberen Gehäuseteiles (2) mit einer Ringfläche (13) verschlossen ist und beide Gehäuseteile (2, 6) in der Gehrungsschnittebene (7) miteinander verbunden sind, wobei der Innenraum (6′) des unteren Gehäuseteiles (6) mit mindestens einer an der höchsten Stelle (14) des Innenraumes (6′) angesetzten, zum Kesselvorlauf (15) führenden Überströmleitung (16) versehen ist.

6. Heizkessel nach Anspruch 5,
**dadurch gekennzeichnet**,
daß an der höchsten Stelle (14′) des Innenraumes (2′) des oberen Gehäuseteiles (2) ein Kesselvorlaufanschlußkasten (17) mit Vorlaufleitung (18) angeordnet ist, an die die Überströmleitung (16) des unteren Gehäuseteiles (6) angeschlossen ist.

7. Heizkessel nach einem der Ansprüche 1 bis 6,
**dadurch gekennzeichnet**,
daß an der Platte (9) im Bereich der tiefstliegenden Brennkammermantellinie (19) eine das untere Gehäuseteil (6) durchgreifende, im Abgas- und Kondensatsammelraum (20) ausmündende Kondensatabflußleitung (21) angeschlossen ist.

8. Heizkessel nach einem der Ansprüche 1 bis 7,
**dadurch gekennzeichnet**,
daß das untere Gehäuseteil (6) mit einer sich zur Platte (9) parallel erstreckenden Heizgaszuganschlußplatte (22) abgeschlossen ist, die zusammen mit einem kondensatfesten Bodenblech (23) und einer den Abgasanschlußstutzen (24) aufweisenden Seitenwand (25) den mit einem Kondensatabfluß (26) versehenen Abgas- und Kondensatsammelraum (20) begrenzt.

9. Heizkessel nach einem der Ansprüche 1 bis 8,
**dadurch gekennzeichnet**,
daß die Längsachse (5) des oberen Gehäuseteiles (2) und damit der Brennkammer (1) senkrecht zur Längsachse (29) des unteren Gehäuseteiles (6) angeordnet ist, wobei die Gehrungsschnittebene (7) den Winkel α der beiden Längsachsen (5, 29) halbiert oder angenähert halbiert.

10. Heizkessel nach Anspruch 9,
**dadurch gekennzeichnet**,
daß die Längsachse (29) des unteren Gehäuseteiles (6) in bezug auf die Vertikale (V) zur brennerfernen Seite hin um einen Winkel β von 1 bis 10°, vorzugsweise um 5° geneigt angeordnet ist.

11. Heizkessel nach einem der Ansprüche 5 bis 10,
**dadurch gekennzeichnet**,
daß die Platte (9) mit eiener Eintiefung (30) und die Ringfläche (13) mit einem Ringkragen (31) versehen und der Ringkragen (31), mit einer Dichtung (32) gasdicht abgedichtet, in die Eintiefung (30) eingesetzt ist.

## Claims

1. A heating boiler comprising a water-carrying housing (3) with a combustion chamber (1) disposed in the upper portion and oriented in a direction substantially horizontal, from which combustion chamber (1) heating gas flues (4) are leading to an exhaust gas and condensate collecting chamber (20) containing a gas discharge and being disposed at the bottom of the housing, with the heating gas flues (4) and the terminations thereof being connected to the combustion chamber (1) in the area facing away from the burner,
characterized in that the portion (2) of housing (3) containing the combustion chamber (1), and the combustion chamber (1) as such, and the portion (6) of the water-carrying housing (3) containing the heating gas flues (4) are joined together in a common mitre cutting plane (7) in which is disposed a correspondingly inclined plate (9) forming the bottom (8) of the combustion chamber (1) facing away form the burner and containing heating gas flue orifices (10), to which plate (9) are connected, in liquid-tight manner, the heating gas flue ends (4′), and that the water-carrying interior spaces (2′, 6′) of the two housing portions (2,6) are interconnected.

2. A heating boiler according to claim 1,
characterized in that the heating gas flues (4) are in the form of pockets (4˝).

3. A heating gas boiler according to claim 2,
characterized in that the pockets (4˝) are disposed, with the cross-sectional longitudinal axes (11) thereof, in a manner oriented in the in-flow direction.

4. A heating boiler according to any one of claims 1 to 3,
characterized in that the plate (9) is in the form of a partition welded to the two housing portions (2,6) and, in the area of the water-carrying interior chambers (2′,6′), is provided with overflow orifices (12).

5. A heating boiler according to any one of claims 1 to 3,
characterized in that the plate (9) is connected to the lower housing portion (6), the water-carrying interior chamber (2′) of the upper housing portion (2,6), in the mitre cutting plane (7), are interconnected, with the interior (6′) of the lower housing portion (6) being provided with at least one overflow conduit (16) mounted at the peak (14) of the interior (6′) and leading to the forward conduit (15) of the boiler.

6. A heating boiler according to claim 5,
characterized in that disposed at the peak (14′) of the interior (2′) of the upper housing portion (2) is a connecting box (17) having a forward conduit (18) to which is connected the overflow conduit (16) of the lower housing portion (6).

7. A heating boiler according to any one of claims 1 to 6,
characterized in that connected to the plate (9), in the area of the lowest combustion chamber shell line (19), is a condensate discharge conduit (21) passing through the lower housing portion (6) and terminating in the exhaust gas and condensate collecting chamber (20).

8. A heating boiler according to any one of claims 1 to 7,
characterized in that the lower housing portion (6) is sealed by a gas heating flue connecting plate (22) extending in parallel to plate (9) which plate 22, together with a condensate-resistant bottom sheet (23) and a side wall (25) containing the exhaust gas connecting nozzle (24) confines the exhaust gas and condensate collecting chamber (20) provided with a condensate discharge (26).

9. A heating boiler according to any one of claims 1 to 8,
characterized in that the longitudinal axis (5) of the upper housing portion (2) and, hence, of the combustion chamber (1) is disposed in a direction vertical to the longitudinal axis (29) of the lower housing portion (6), with the mitre cutting plane (7) bisecting or approximately bisecting the angle α of the two longitudinal axes (5,29).

10. A heating boiler according to claim 9,
characterized in that the longitudinal axis (29) of the lower housing portion (6) relative to the vertical (V), toward the side facing away from the burner, is inclined at an angle β of between 1 and 10°, preferably 5°.

11. A heating boiler according to any one of claims 5 to 10,
characterized in that the plate (9) is provided with a depression (30), the annular face (13) is furnished with an annular flange (31), and the annular flange (31) sealed in gas-tight manner by a sealant (32) is inserted into the depression (30).

## Revendications

1. Chaudière de chauffage, constituée d'une enceinte (3) de conduite d'eau, comprenant une chambre de combustion (1) qui est disposée dans la partie supérieure, orientée sensiblement horizontalement et à partir de laquelle des couloirs de gaz de chauffage (4) sont dirigés vers une chambre collectrice (20) de gaz brûlés et de condensation, disposée dans la partie basse de l'enceinte et munie d'un dispositif d'évacuation de gaz, les couloirs de gaz de chauffage (4) et leurs ouvertures étant reliés à la chambre de combustion (1) dans la zone éloignée du brûleur, caractérisée en ce que la partie (2) de l'enceinte qui contient la chambre de combustion (1), la chambre de combustion (1) proprement dite et la partie (6) de l'enceinte (3) de conduite d'eau qui contient les couloirs de gaz de chauffage (4) sont réunies dans un plan commun oblique (7) dans lequel est disposée une plaque (9) qui est inclinée, forme le fond (8) éloigné du brûleur de la chambre de combustion (1) et est pourvue d'ouvertures (10) de couloirs de gaz de chauffage et à laquelle les extrémités (4′) des couloirs de gaz de chauffage sont reliées de manière étanche aux liquides, et en ce que les chambres intérieures (2′, 6′) de conduite d'eau des deux parties d'enceinte (2, 6) sont reliées entre elles.

2. Chaudière de chauffage selon la revendication 1, caractérisée en ce que les couloirs de gaz de chauffage (4) sont réalisés sous la forme de poches (4˝).

3. Chaudière de chauffage selon la revendication 2, caractérisée en ce que les axes longitudinaux en coupe (11) des poches (4˝) sont orientés dans le sens d'écoulement.

4. Chaudière de chauffage selon l'une des revendications 1 à 3, caractérisée en ce que la plaque (9) est conçue sous la forme d'une surface de séparation soudée aux deux parties d'enceinte (2, 6) et est munie d'ouvertures de trop-plein (12) dans la zone des chambres intérieures (2′, 6′) de conduite d'eau.

5. Chaudière de chauffage selon l'une des revendications 1 à 3, caractérisée en ce que la plaque (9) est reliée à la partie inférieure d'enceinte (6), la chambre intérieure (2′) de conduite d'eau de la partie supérieure d'enceinte (2) est fermée par une surface annulaire (13) et les deux parties d'enceinte (2, 6) sont reliées entre elles dans le plan oblique (7), la chambre intérieure (6′) de la partie inférieure d'enceinte (6) étant munie d'au moins une conduite de trop-plein (16) disposée au point le plus haut (14) de la chambre intérieure (6′) et dirigée vers le circuit aller (15) de la chaudière.

6. Chaudière de chauffage selon la revendication 5, caractérisée en ce qu'au point le plus haut (14′) de la chambre intérieure (2′) de la partie supérieure d'enceinte (2) est disposé un caisson de raccordement (17) au circuit aller de la chaudière, ledit caisson étant muni d'une conduite aller (18) à laquelle est reliée la conduite de trop-plein (16) de la partie inférieure d'enceinte (6).

7. Chaudière de chauffage selon l'une quelconque des revendications 1 à 6, caractérisée en ce qu'une conduite d'évacuation de condensation (21) traversant la partie inférieure d'enceinte (6) et débouchant dans la chambre collectrice (20) de gaz brûlés et de condensation est reliée à la plaque (9) dans la zone de la ligne génératrice (19) la plus basse de la chambre de combustion.

8. Chaudière de chauffage selon l'une des revendications 1 à 7, caractérisée en ce que la partie inférieure d'enceinte (6) est fermée par une plaque de raccordement (22) aux couloirs de gaz de chauffage, ladite plaque de raccordement (22) s'étendant parallèlement à la plaque (9) et délimitant, avec une tôle de fond (23) résistante à la condensation et avec une paroi latérale (25) comportant le manchon de raccordement (24) des gaz brûlés, la chambre collectrice (20) de gaz brûlés et de condensation munie d'un dispositif d'évacuation de condensation (26).

9. Chaudière de chauffage selon l'une des revendications 1 à 8, caractérisée en ce que l'axe longitudinal (5) de la partie supérieure d'enceinte (2) et donc de la chambre de combustion (1) est disposé perpendiculairement à l'axe longitudinal (29) de la partie inférieure d'enceinte (6), le plan oblique (7) divisant en deux ou approximativement en deux l'angle formé par les deux axes longitudinaux (5, 29).

10. Chaudière de chauffage selon la revendication 9, caractérisée en ce que, par rapport à la verticale (V), l'axe longitudinal (29) de la partie inférieure d'enceinte (6) est incliné, vers le côté éloigné du brûleur, selon un angle β de 1 à 10°, de préférence de 5°.

11. Chaudière de chauffage selon l'une des revendications 5 à 10, caractérisée en ce que la plaque (9) est munie d'un renfoncement (30) et la surface annulaire (13) est munie d'un collet annulaire (31), et le collet annulaire (31) est logé dans le renfoncement (30) de manière étanche aux gaz à l'aide d'un joint (32).
